# EUROPEAN PATENT APPLICATION

(11) **EP 4 768 367 A1**
(43) Date of publication of application: **01.07.2026**
(21) Application number: 23949569.0
(22) Date of filing: 14.11.2023
(51) Int. Cl.: B62D 25/08, B62D 21/15

(54) **VEHICLE BODY ASSEMBLY AND VEHICLE**

(30) Priority: 22.08.2023 CN 202311065715
(71) Applicant: Zhejiang Liankong Technologies Co., Ltd., Ningbo, Zhejiang 315336 (CN); Zhejiang Geely Automobile Engineering Technology Development Co., Ltd., Ningbo, Zhejiang 315336 (CN); Zhejiang Geely Holding Group Co., Ltd., Hangzhou, Zhejiang 310051 (CN)
(72) Inventor: TANG, Jinming, Hangzhou, Zhejiang 310051 (CN); WANG, Tongling, Hangzhou, Zhejiang 310051 (CN); CHENG, Qianqian, Hangzhou, Zhejiang 310051 (CN); ZHANG, Lanmin, Hangzhou, Zhejiang 310051 (CN); CHEN, Kaihao, Hangzhou, Zhejiang 310051 (CN); LIAO, Wenjian, Hangzhou, Zhejiang 310051 (CN); LIANG, Hu, Hangzhou, Zhejiang 310051 (CN); HU, Zhiyong, Hangzhou, Zhejiang 310051 (CN); YONG, Kuan, Hangzhou, Zhejiang 310051 (CN); LI, Lei, Hangzhou, Zhejiang 310051 (CN)
(74) Representative: Kraus & Lederer PartGmbB
(86) International application number: PCT/CN2023/131624
(87) International publication number: WO 2025/039390

(57) **Abstract**

Provided are a vehicle body assembly (100) and a vehicle. The vehicle body assembly (100) includes a plurality of longitudinal beams (82), a first connection section (85), a plurality of sill beams (86), a front bulkhead cross beam (81), a second connection section (84), a middle channel (91), and a seat mounting beam (1). The first connection section (85) is connected between one of the plurality of longitudinal beams (82) and a corresponding one of the plurality of sill beams (86). The front bulkhead cross beam (81) is connected to the plurality of longitudinal beams (82). The seat mounting beam (1) is connected to the plurality of sill beams (86). The middle channel (91) is connected between the front bulkhead cross beam (81) and the seat mounting beam (1). The second connection section (84) is connected between the middle channel (91) and a corresponding one of first connection sections (85).

## Description

### CROSS-REFERENCE TO RELATED APPLICATION

This application is submitted based on and claims priority to Chinese Patent Application No. 202311065715.0, filed on August 22, 2023, the entire disclosure of which is incorporated herein by reference.

### FIELD

The present disclosure relates to the field of vehicles, and more particularly, to a vehicle body assembly and a vehicle having the vehicle body assembly.

### BACKGROUND

In the related art, a body structure of a vehicle has a significant impact on its safety performance. When a frontal collision of the vehicle occurs, the body structure of the vehicle needs to absorb a huge collision force to ensure safety of a driver and passengers. However, an existing design of the body structure of the vehicle is unreasonable. When the frontal collision of the vehicle occurs, body structure components in front of a passenger compartment are likely to intrude into the passenger compartment, resulting in poor safety performance of existing vehicles.

### SUMMARY

The present disclosure aims to solve one of the technical problems in the related art at least to some extent.

To this end, an object of the present disclosure is to provide a vehicle body assembly, which is capable of reducing a probability of passenger injury. In this way, safety performance of a vehicle is improved.

The present disclosure further provides a vehicle.

The vehicle body assembly according to the present disclosure includes a plurality of longitudinal beams, a plurality of sill beams, a first connection section, a front bulkhead cross beam, a seat mounting beam, a middle channel, and a second connection section. The first connection section is connected between one of the plurality of longitudinal beams and a corresponding one of the plurality of sill beams. The front bulkhead cross beam is connected to each of the plurality of longitudinal beams. The seat mounting beam is connected to each of the plurality of sill beams. The middle channel is connected between the front bulkhead cross beam and the seat mounting beam. The second connection section is connected between the middle channel and a corresponding one of first connection sections.

For the vehicle body assembly according to the present disclosure, by connecting the first connection section between the one of the plurality of longitudinal beams and the corresponding one of the plurality of sill beams, and connecting the second connection section between the middle channel and the corresponding one of the first connection sections, the vehicle body assembly can have a reasonable force transmission path. When a frontal collision of the vehicle occurs, the vehicle body assembly can reliably absorb and transmit collision energy, which can reduce the probability of the passenger injury. Thus, the safety performance of the vehicle is improved.

The vehicle according to the present disclosure includes the above-mentioned vehicle body assembly.

Additional aspects and advantages of the present disclosure will be provided at least in part in the following description, or will become apparent in part from the following description, or can be learned from the practice of the present disclosure.

### BRIEF DESCRIPTION OF THE DRAWINGS

FIG. 1 is a schematic view of a vehicle body assembly according to an embodiment of the present disclosure.
FIG. 2 is a schematic view of a vehicle body assembly from another angle according to an embodiment of the present disclosure.
FIG. 3 is a schematic view of a vehicle body assembly according to an embodiment of the present disclosure (with a part of a front bulkhead omitted).
FIG. 4 is an enlarged view of part A in FIG. 3.
FIG. 5 is a schematic view of a vehicle body assembly from another angle according to an embodiment of the present disclosure (with a part of a front bulkhead omitted).
FIG. 6 is a schematic view of a middle channel according to an embodiment of the present disclosure.
FIG. 7 is a schematic view of a middle channel from another angle according to an embodiment of the present disclosure.
FIG. 8 is a schematic view of a middle channel from yet another angle according to an embodiment of the present disclosure.
FIG. 9 is a cross-sectional view taken along line B-B in FIG. 8.

Reference numerals in the specification are as follows:
vehicle body assembly 100;
seat mounting beam 1;
middle channel 91; first channel segment 911; connection flange 9112; second channel segment 912; first lap-joint flange 9121; second lap-joint flange 9122; second groove 9123; first subchannel segment 9124; second subchannel segment 9125; reinforcement structure 913; first groove structure 914;
front bulkhead cross beam 81; longitudinal beam 82; first longitudinal beam 821; second longitudinal beam 822; front bulkhead 83; second connection section 84; first connection section 85; sill beam 86; first sill beam 861; second sill beam 862; A-pillar 87; second groove structure 88; crash beam 89.

### DETAILED DESCRIPTION OF THE EMBODIMENTS

The embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain rather than limit the present disclosure.

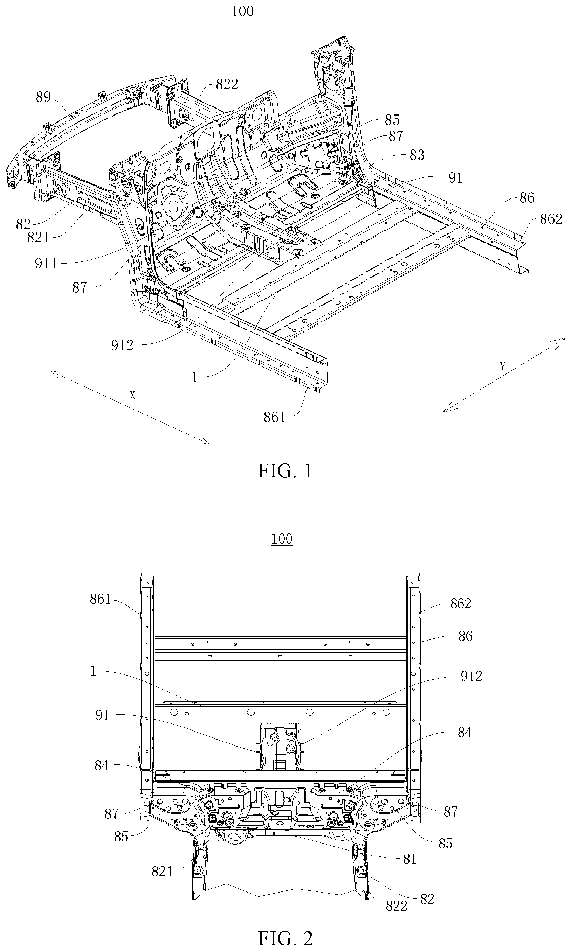

A vehicle body assembly 100 according to embodiments of the present disclosure will be described below with reference to FIGS. 1 to 9.

As shown in FIGS. 1 to 9, the vehicle body assembly 100 according to the embodiments of the present disclosure includes a plurality of longitudinal beams 82, a first connection section 85, a plurality of sill beams 86, a front bulkhead cross beam 81, a second connection section 84, a middle channel 91, and a seat mounting beam 1.

The first connection section 85 is connected between one of the plurality of longitudinal beams 82 and a corresponding one of the plurality of sill beams 86. It should be noted that the number of the longitudinal beams 82 may be the same as the number of the sill beams 86. As some optional embodiments of the present disclosure, two longitudinal beams 82 may be provided, and two sill beams 86 may also be provided. The two sill beams 86 may be in one-to-one correspondence with the two longitudinal beams 82, and the first connection section 85 is connected between a corresponding one of the two longitudinal beams 82 and a corresponding one of the two sill beams 86. For example, the plurality of longitudinal beams 82 may include a first longitudinal beam 821 and a second longitudinal beam 822, and the plurality of sill beams 86 may include a first sill beam 861 and a second sill beam 862; and the first connection section 85 is connected between the first longitudinal beam 821 and the first sill beam 861, and the first connection section 85 is connected between the second longitudinal beam 822 and the second sill beam 862. As some optional embodiments of the present disclosure, the number of the first connection sections 85 may be the same as the number of the longitudinal beams 82 and the number of the sill beams 86. For example, two first connection sections 85 may be provided. One of the two first connection sections 85 is connected between the first longitudinal beam 821 and the first sill beam 861, and another one of the two first connection sections 85 is connected between the second longitudinal beam 822 and the second sill beam 862.

As some optional embodiments of the present disclosure, as shown in FIGS. 1 to 5, the longitudinal beam 82 may be provided with a crash beam 89 at an end of the longitudinal beam 82 away from the sill beam 86. For example, the crash beam 89 may have an end connected to an end of the first longitudinal beam 821 away from the first sill beam 861 and another end connected to an end of the second longitudinal beam 822 away from the second sill beam 862.

The front bulkhead cross beam 81 is connected to each of the plurality of longitudinal beams 82. The front bulkhead cross beam 81 may extend in a width direction of a vehicle (i.e., a Y direction shown in FIG. 1). Two ends of the front bulkhead cross beam 81 may be respectively connected to the plurality of longitudinal beams 82. For example, the plurality of longitudinal beams 82 may include a first longitudinal beam 821 and a second longitudinal beam 822, and the two ends of the front bulkhead cross beam 81 may be respectively connected to the first longitudinal beam 821 and the second longitudinal beam 822.

The seat mounting beam 1 is connected to each of the plurality of sill beams 86. The seat mounting beam 1 may be a front mounting cross beam of a front seat of the vehicle. The seat mounting beam 1 may extend in the width direction of the vehicle (i.e., the Y direction shown in FIG. 1). Two ends of the seat mounting beam 1 may be respectively connected to the plurality of sill beams 86. For example, the plurality of sill beams 86 may include a first sill beam 861 and a second sill beam 862, and the two ends of the seat mounting beam 1 may be respectively connected to the first sill beam 861 and the second sill beam 862.

The middle channel 91 is connected between the front bulkhead cross beam 81 and the seat mounting beam 1. The middle channel 91 may extend in a length direction of the vehicle (i.e., an X direction shown in FIG. 1). An end of the middle channel 91 close to the front bulkhead cross beam 81 (i.e., a front end of the middle channel 91) may be connected to the front bulkhead cross beam 81, and an end of the middle channel 91 close to the seat mounting beam 1 (i.e., a rear end of the middle channel 91) may be connected to the seat mounting beam 1.

The second connection section 84 is connected between the middle channel 91 and a corresponding one of first connection sections 85. In the width direction of the vehicle (i.e., the Y direction shown in FIG. 1), the first connection section 85 may be located at a side of the middle channel 91, and the second connection section 84 is connected between the middle channel 91 and the corresponding one of the first connection sections 85. As some optional embodiments of the present disclosure, two first connection sections 85 may be provided and respectively located at two sides of the middle channel 91, and two second connection sections 84 may be provided. One of the two second connection sections 84 may be connected between the middle channel 91 and one of the two first connection sections 85, and another one of the two second connection sections 84 may be connected between the middle channel 91 and another one of the two first connection sections 85.

It should be noted that the vehicle body assembly 100 of the present disclosure can form a plurality of force transmission paths. Specifically, a first force transmission path among the plurality of force transmission paths is composed of the longitudinal beam 82, the first connection section 85, and the sill beam 86 in sequence. In this force transmission path, energy is transmitted to a rear longitudinal beam of a rear floor of the vehicle through the longitudinal beam 82, the first connection section 85, and the sill beam 86. A second force transmission path among the plurality of force transmission paths is composed of the front bulkhead cross beam 81, the second connection section 84, the middle channel 91, and the seat mounting beam 1 in sequence. In this force transmission path, energy is mainly transmitted to the seat mounting beam 1 through the front bulkhead cross beam 81.

After simulation analysis, the first force transmission path can absorb approximately 90% of the energy and is a primary force transmission path. The second force transmission path can absorb approximately 10% of the energy and is a secondary force transmission path. In addition, it should be noted that since the plurality of longitudinal beams 82, the plurality of sill beams 86, the plurality of first connection sections 85, and the plurality of second connection sections 84 may be provided, in an embodiment where the plurality of longitudinal beams 82 includes a first longitudinal beam 821 and a second longitudinal beam 822, and the plurality of sill beams 86 may include a first sill beam 861 and a second sill beam 862, the first force transmission path may include two branches, one of which is composed of the first longitudinal beam 821, one of the plurality of first connection sections 85, and the first sill beam 861 in sequence, and another one of which is composed of the second longitudinal beam 822, another one of the plurality of first connection sections 85, and the second sill beam 862 in sequence. Each of the two branches of the first force transmission path can absorb approximately 45% of the energy. Moreover, the second force transmission path may include two branches, one of which is composed of the front bulkhead cross beam 81, one of the plurality of second connection sections 84, the middle channel 91, and the seat mounting beam 1 in sequence, and another one of which is composed of the front bulkhead cross beam 81, another one of the plurality of second connection sections 84, the middle channel 91, and the seat mounting beam 1 in sequence. Each of the two branches of the second force transmission path can absorb approximately 5% of the energy.

Furthermore, it should be noted that in the plurality of force transmission paths of the present disclosure, there are not only longitudinal transmission forces but also lateral transmission forces. During a collision, longitudinal force transmission energy exerted on the longitudinal beam 82 is decomposed into lateral transmission forces by the front bulkhead cross beam 81 and the second connection section 84. Specifically, the lateral force may be divided into a front lateral force and a rear lateral force. Along the length direction of the vehicle (i.e., the X direction shown in FIG. 1), the front bulkhead cross beam 81 may be located in front of the second connection section 84. The front lateral force is borne by the front bulkhead cross beam 81 and transmitted to the seat mounting beam 1 through the middle channel 91. The rear lateral force is borne by the second connection section 84 and transmitted to the seat mounting beam 1 through the middle channel 91. That is, the lateral force is jointly borne by the front bulkhead cross beam 81 and the second connection section 84, and the energy is transferred to the middle channel 91 to complete transmission of the secondary force transmission path.

As some optional embodiments of the present disclosure, each of the first longitudinal beam 821 and the second longitudinal beam 822 may include an inner beam plate and an outer beam plate, which may be connected to each other through welding to form a closed structure. Each of the first longitudinal beam 821 and the second longitudinal beam 822 is located behind the crash beam 89. The first longitudinal beam 821 and the second longitudinal beam 822 may be connected to the crash beam 89 through bolting. The longitudinal beam 82 and the corresponding first connection section 85 may be connected to each other through welding. The first connection section 85 and the corresponding sill beam 86 may be connected to each other through welding. The front bulkhead cross beam 81 may be connected to the longitudinal beam 82 and the middle channel 91 through welding. The middle channel 91 and the seat mounting beam 1 may be connected to each other through welding. The middle channel 91 and the corresponding second connection section 84 may be connected to each other through welding. The seat mounting beam 1 may be connected to each of the plurality of sill beams 86 through welding.

Therefore, in the present disclosure, by connecting the first connection section 85 between the longitudinal beam 82 and the corresponding sill beam 86, and connecting the second connection section 84 between the middle channel 91 and the corresponding first connection section 85, the vehicle body assembly 100 can have a reasonable force transmission path. When a frontal collision of the vehicle occurs, the vehicle body assembly 100 can reliably absorb and transmit collision energy, which can reduce a probability of passenger injury. Thus, safety performance of the vehicle can be improved.

In some embodiments of the present disclosure, as shown in FIGS. 1 to 3 and 5, the vehicle body assembly 100 may further include an A-pillar 87, which may be connected to a corresponding one of the plurality of sill beams 86 and a corresponding one of first connection sections 85. As some optional embodiments of the present disclosure, a plurality of A-pillars 87 may be provided, and the number of the A-pillars 87 may be the same as the number of the sill beams 86. For example, two A-pillars 87 and two first connection sections 85 may be provided. One of the two A-pillars 87 may be connected to both the first sill beam 861 and one of the two first connection sections 85, and another one of the two A-pillars 87 may be connected to both the second sill beam 862 and another one of the two first connection sections 85. By providing the A-pillar 87, the first force transmission path may be composed of the longitudinal beam 82, the first connection section 85, the A-pillar 87, and the sill beam 86 in sequence. Since the first force transmission path needs to transmit more collision force, the collision force can be reliably transmitted along the first force transmission path by providing the A-pillar 87 in the first force transmission path. Thus, the vehicle body assembly 100 can reliably absorb and transmit the collision energy, which is beneficial to improving the safety performance of the vehicle.

In some embodiments of the present disclosure, as shown in FIGS. 1 to 3 and 5, in a first direction of the vehicle body assembly 100 (i.e., the length direction of the vehicle, i.e., the X direction shown in FIG. 1), a connection between the first connection section 85 and the corresponding one of the plurality of sill beams 86 may be located at a rear side of a connection between the first connection section 85 and the corresponding one of the plurality of longitudinal beams 82. And in a second direction of the vehicle body assembly 100 (i.e., the width direction of the vehicle, i.e., the Y direction shown in FIG. 1), the connection between the first connection section 85 and the corresponding one of the plurality of sill beams 86 may be located at an outer side of the connection between the first connection section 85 and the corresponding one of the plurality of longitudinal beams 82. The first direction is perpendicular to the second direction.

That is, the connection between the first connection section 85 and the corresponding sill beam 86 may be located at an outer rear side of the connection between the first connection section 85 and the corresponding longitudinal beam 82. That is, the connection between the first connection section 85 and the corresponding longitudinal beam 82 can be located at an inner front side of the connection between the first connection section 85 and the corresponding sill beam 86. Such a configuration enables the connection between the first connection section 85 and the corresponding longitudinal beam 82 and the connection between the first connection section 85 and the corresponding sill beam 86 to have a reasonable positional relationship, forming a branched structure. As a result, the vehicle body assembly 100 can reliably absorb and transmit the collision energy.

As some optional embodiments of the present disclosure, in the first direction of the vehicle body assembly 100 (i.e., the length direction of the vehicle, i.e., the X direction shown in FIG. 1), a connection between the first connection section 85 and a corresponding one of A-pillars 87 may be located at the rear side of the connection between the first connection section 85 and the corresponding longitudinal beam 82; and in the second direction of the vehicle body assembly 100 (i.e., the width direction of the vehicle, i.e., the Y direction shown in FIG. 1), the connection between the first connection section 85 and the corresponding one of the A-pillars 87 may be located at an outer side of the connection between the first connection section 85 and the corresponding longitudinal beam 82.

That is, the connection between the first connection section 85 and the corresponding A-pillar 87 may be located at an outer rear side of the connection between the first connection section 85 and the corresponding longitudinal beam 82. In other words, the connection between the first connection section 85 and the corresponding longitudinal beam 82 may be located at an inner front side of the connection between the first connection section 85 and the corresponding A-pillar 87. Such a configuration enables the connection between the first connection section 85 and the corresponding longitudinal beam 82 and the connection between the first connection section 85 and the corresponding A-pillar 87 to have a reasonable positional relationship, forming a branched structure. As a result, the vehicle body assembly 100 can reliably absorb and transmit the collision energy.

As some optional embodiments of the present disclosure, the first connection section 85 may be located behind a front wheel housing of the vehicle.

In some embodiments of the present disclosure, as shown in FIGS. 1 to 3 and 5, in the first direction of the vehicle body assembly 100 (i.e., the length direction of the vehicle, i.e., the X direction shown in FIG. 1), a connection between the second connection section 84 and the corresponding one of the first connection sections 85 may be located at the rear side of the connection between the first connection section 85 and the corresponding one of the plurality of longitudinal beams 82; and in the second direction of the vehicle body assembly 100 (i.e., the width direction of the vehicle, i.e., the Y direction shown in FIG. 1), the connection between the second connection section 84 and the corresponding one of the first connection sections 85 may be located at an inner side of the connection between the first connection section 85 and the corresponding one of the plurality of sill beams 86. Such a configuration enables the connection between the second connection section 84 and the corresponding first connection section 85 and the connection between the first connection section 85 and the corresponding sill beam 86 to have a reasonable positional relationship, and enables the connection between the second connection section 84 and the corresponding first connection section 85 and the connection between the first connection section 85 and the corresponding sill beam 86 to have a reasonable positional relationship. As a result, the vehicle body assembly 100 can reliably absorb and transmit the collision energy, which is beneficial to improving the safety performance of the vehicle.

As some optional embodiments of the present disclosure, as shown in FIGS. 1 to 4, in the second direction of the vehicle body assembly 100 (i.e., the width direction of the vehicle, i.e., the Y direction shown in FIG. 1), the connection between the second connection section 84 and the corresponding first connection section 85 may be located at an inner side of the connection between the first connection section 85 and the corresponding one of the A-pillars 87. Such a configuration enables the connection between the second connection section 84 and the corresponding first connection section 85 and the connection between the first connection section 85 and the corresponding A-pillar 87 to have a reasonable positional relationship, which is beneficial to improving the safety performance of the vehicle.

In some embodiments of the present disclosure, the first connection section 85 and a corresponding one of second connection sections 84 may be integrally formed. As some optional embodiments of the present disclosure, as shown in FIGS. 1 to 3 and FIG. 5, two first connection sections 85 may be provided, and two second connection sections 84 may also be provided. One of the two first connection sections 85 is connected between the first longitudinal beam 821 and the first sill beam 861, and another one of the two first connection sections 85 is connected between the second longitudinal beam 822 and the second sill beam 862. That is, in the second direction of the vehicle body assembly 100 (i.e., the width direction of the vehicle, i.e., the Y direction shown in FIG. 1), the one of the two first connection sections 85 is located at a left side of the middle channel 91, and the other one of the two first connection sections 85 is located at a right side of the middle channel 91. one of the two second connection sections 84 and the first connection section 85 located at the left side of the middle channel 91 may be integrally formed, and another one of the two second connection sections 84 and the first connection section 85 located at the right side of the middle channel 91 may be integrally formed.

The integrally formed component has good structural strength. By constructing the first connection section 85 and the corresponding second connection section 84 as the integrally formed component, a probability of a separation between the first connection section 85 and the corresponding second connection section 84 can be reduced. Moreover, such a configuration can also reduce production difficulty of the first connection section 85 and the second connection section 84 and improve production efficiency of the first connection section 85 and the second connection section 84.

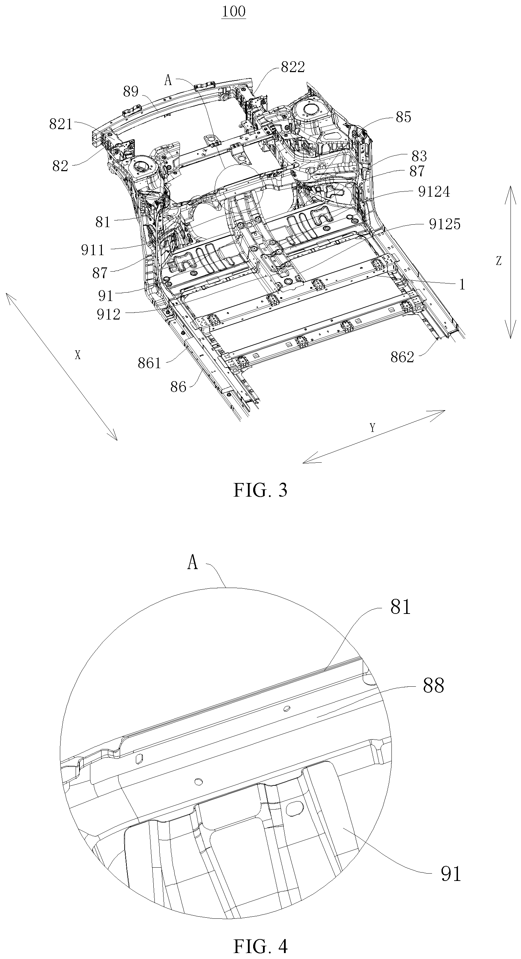

In some embodiments of the present disclosure, as shown in FIGS. 1 to 3 and 5, in a first direction of the vehicle body assembly 100 (i.e., the length direction of the vehicle, i.e., the X direction shown in FIG. 1), the second connection section 84 may be located at a rear side of the front bulkhead cross beam 81; and in a third direction of the vehicle body assembly 100 (i.e., a height direction of the vehicle, i.e., a Z direction shown in FIG. 3), the second connection section 84 may be located below the front bulkhead cross beam 81. The first direction is perpendicular to the third direction.

That is, the second connection section 84 may be located at the rear side of the front bulkhead cross beam 81 and below the front bulkhead cross beam 81. In other words, the front bulkhead cross beam 81 may be located at a front side of the second connection section 84 and above the second connection section 84. It should be explained that in the plurality of force transmission paths of the present disclosure, there exists not only a longitudinal transmission force but also a lateral transmission force. The lateral force may be divided into a front lateral force and a rear lateral force. By locating the second connection section 84 at the rear side of the front bulkhead cross beam 81 and below the front bulkhead cross beam 81, the relative position between the second connection section 84 and the front bulkhead cross beam 81 can be rationalized. The front lateral force may be borne by the front bulkhead cross beam 81 and transmitted to the seat mounting beam 1 through the middle channel 91, while the rear lateral force may be borne by the second connection section 84 and transmitted to the seat mounting beam 1 through the middle channel 91. In this way, the lateral force can be reliably borne, and the energy can be transmitted to the middle channel 91, thus completing the transmission of the secondary force transmission path, which is beneficial to improving the safety performance of the vehicle.

In some embodiments of the present disclosure, as shown in FIGS. 1 to 3 and 5, in a length direction of the middle channel 91, the middle channel 91 may extend in the first direction (i.e., the length direction of the vehicle, i.e., the X direction shown in FIG. 1), and a connection between the second connection section 84 and the middle channel 91 may be located at a middle part of the middle channel 91. By locating the connection between the second connection section 84 and the middle channel 91 at the middle part of the middle channel 91, the rear lateral force borne by the second connection section 84 can be transmitted to the middle channel 91 from the middle part of the middle channel 91, which is beneficial to improving the safety performance of the vehicle.

In some embodiments of the present disclosure, as shown in FIGS. 1 to 3 and 5, in a first direction of the vehicle body assembly 100, a front end of the middle channel 91 may be connected to the front bulkhead cross beam 81, and a rear end of the middle channel 91 may be connected to the seat mounting beam 1. The front end of the middle channel 91 may be an end of the middle channel 91 close to the front bulkhead cross beam 81, and the rear end of the middle channel 91 may be an end of the middle channel 91 close to the seat mounting beam 1. By connecting the rear end of the middle channel 91 to the seat mounting beam 1, a length of the middle channel 91 can be shortened, eliminating the presence of the middle channel 91 in a rear part of the passenger compartment. Thus, comfort of passengers in the rear part of the passenger compartment can be improved.

Furthermore, a battery pack can have larger mounting space due to the shortened length of the middle channel 91, which is beneficial to increasing a capacity of the battery pack.

In some embodiments of the present disclosure, as shown in FIGS. 1, 3, and 6 to 8, the middle channel 91 may include a first channel segment 911 and a second channel segment 912 connected to the first channel segment 911. An end of the first channel segment 911 away from the second channel segment 912 is connected to the front bulkhead cross beam 81, and an end of the second channel segment 912 away from the first channel segment 911 is connected to the seat mounting beam 1. An end of the first channel segment 911 close to the second channel segment 912 is connected to an end of the second channel segment 912 close to the first channel segment 911. By connecting the second channel segment 912 to the seat mounting beam 1, the length of the middle channel 91 can be shortened, eliminating the presence of the middle channel 91 in the rear part of the passenger compartment. Thus, the comfort of the passengers in the rear part of the passenger compartment. In addition, by connecting the second channel segment 912 to the seat mounting beam 1, collision safety performance of the vehicle can be guaranteed. As some optional embodiments of the present disclosure, the middle channel 91 is an integrally formed component. That is, the first channel segment 911 and the second channel segment 912 are integrally formed. Such a configuration can improve structural strength of the middle channel 91.

In the length direction of the vehicle (i.e., the X direction shown in the figure), the first channel segment 911 is located at a front side of the second channel segment 912. That is, the middle channel 91 is a structure extending in the length direction of the vehicle, the front bulkhead cross beam 81 is located at a front side of the seat mounting beam 1. Furthermore, in the height direction of the vehicle (i.e., the Z direction shown in the figure), the front bulkhead cross beam 81 has a height higher than a height of the seat mounting beam 1, and the end of the first channel segment 911 away from the second channel segment 912 is higher than the second channel segment 912. That is, the end of the first channel segment 911 connected to the front bulkhead cross beam 81 is higher than the second channel segment 912. Furthermore, the first channel segment 911 is constructed into a downwardly concave arcuate shape. That is, the first channel segment 911 is constructed as a downwardly concave arcuate segment, or it can also be understood that a longitudinal section of the first channel segment 911 (i.e., a section in the height direction of the vehicle) has an arcuate shape.

It should be explained that by constructing the middle channel 91 in such a manner that the end of the first channel segment 911 away from the second channel segment 912 is higher than the second channel segment 912, the middle channel 91 can be easily connected between the front bulkhead cross beam 81 and the seat mounting beam 1. Furthermore, by constructing the first channel segment 911 as a downwardly concave arcuate segment, the first channel segment 911 can be downwardly concave, thereby reducing space occupied by the middle channel 91. In this way, easier arrangement of vehicle components is facilitated. As some optional embodiments of the present disclosure, the first channel segment 911 can be shielded by a center console of the vehicle, that is, the first channel segment 911 can provide a mounting point for the center console of the vehicle. By constructing the first channel segment 911 as the downwardly concave arcuate segment, larger mounting space can be provided for the center console of the vehicle.

As some optional embodiments of the present disclosure, the middle channel 91 may be connected to both the front bulkhead cross beam 81 and the seat mounting beam 1 through welding.

As some optional embodiments of the present disclosure, the middle channel 91 may be located inside the passenger compartment and may be located above the front floor of the vehicle. As some optional embodiments of the present disclosure, an upper surface of the battery pack of the vehicle may be constructed as the front floor of the vehicle. As some optional embodiments of the present disclosure, the middle channel 91 may be centrally located inside the passenger compartment.

Therefore, by connecting the second channel segment 912 to the seat mounting beam 1, the length of the middle channel 91 can be shortened, eliminating the presence of the middle channel 91 in the rear part of the passenger compartment. Thus, the comfort of the passengers in the rear part of the passenger compartment can be improved. Moreover, by connecting the second channel segment 912 to the seat mounting beam 1, the collision safety performance of the vehicle can be guaranteed. In addition, by constructing the first channel segment 911 as the downwardly concave arcuate shape, the space occupied by the middle channel 91 can be reduced. In this way, the easier arrangement of the vehicle components is facilitated.

Furthermore, the middle channel 91 of the present disclosure has a short length, which is beneficial to reducing a weight of the middle channel 91, thereby facilitating a lightweight design of the vehicle.

In some embodiments of the present disclosure, as shown in FIGS. 1, 3, 6, and 8, the first channel segment 911 may have a width gradually increasing from the first channel segment 911 to the second channel segment 912.

That is, the width of the first channel segment 911 may gradually increase in the length direction of the vehicle (i.e., the X direction shown in FIG. 1). The width of the first channel segment 911 can be understood as the width of the first channel segment 911 in the width direction of the vehicle (i.e., the Y direction shown in FIG. 1). By constructing the width of the first channel segment 911 to gradually increase in the length direction of the vehicle, structural strength of the first channel segment 911 can be increased, and the structural strength of the middle channel 91 can therefore be increased. Thus, the collision safety performance of the vehicle is ensured, which is beneficial to improving safety of the vehicle.

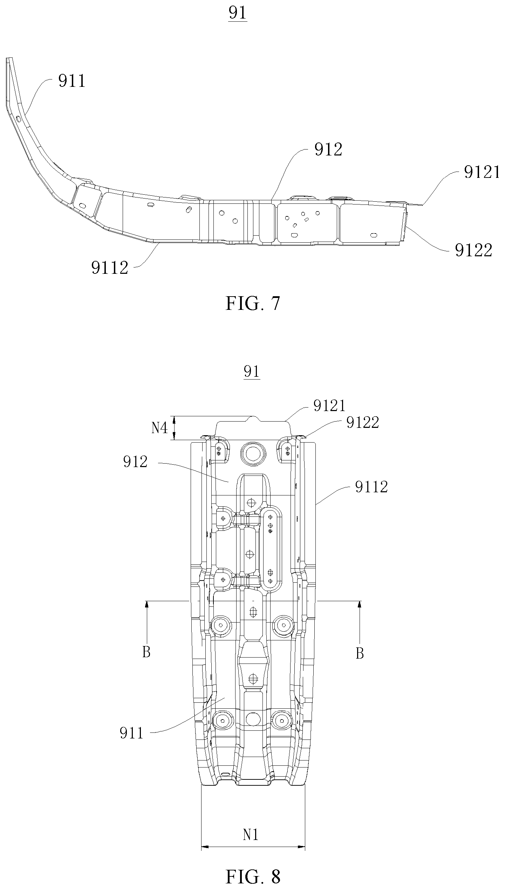

In some embodiments of the present disclosure, as shown in FIG. 8, the end of the first channel segment 911 away from the second channel segment 912 may have a width of N1, where 100 mm≤N1≤180 mm. That is, in the width direction of the vehicle (i.e., the Y direction shown in FIG. 1), the width N1 of the end of the first channel segment 911 away from the second channel segment 912 may be any value between 100 mm and 180 mm. For example, N1 can be, but is not limited to, 100 mm, 140 mm, 180 mm, etc. Such a configuration can rationalize the width dimension of the end of the first channel segment 911 away from the second channel segment 912, which is beneficial to ensuring the structural strength of the first channel segment 911.

In some embodiments of the present disclosure, the end of the first channel segment 911 close to the second channel segment 912 may have a width of N2, where 150 mm≤N2≤230 mm. That is, in the width direction of the vehicle (i.e., the Y direction shown in FIG. 1), the width N2 of the end of the first channel segment 911 close to the second channel segment 912 may be any value between 150 mm and 230 mm. For example, N2 can be, but is not limited to, 150 mm, 190 mm, 230 mm, etc. Such a configuration can rationalize the width dimension of the end of the first channel segment 911 close to the second channel segment 912, which is beneficial to further ensuring the structural strength of the first channel segment 911.

It should be explained that in the height direction of the vehicle (i.e., the Z direction shown in FIG. 3), the first channel segment 911 and the second channel segment 912 may be provided with a connection flange 9112 at respective lower ends of the first channel segment 911 and the second channel segment 912, and the width of the first channel segment 911 described in the present disclosure does not include the width of the connection flange 9112.

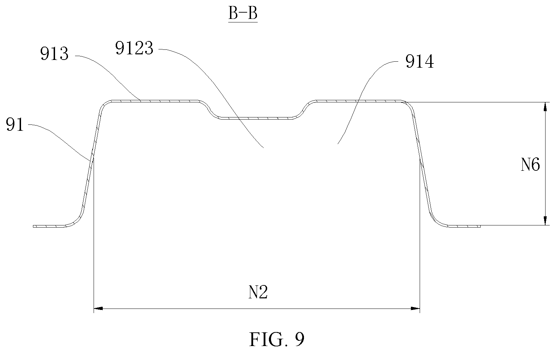

It should be explained that in the height direction of the vehicle (i.e., the Z direction shown in FIG. 3), two side walls of the middle channel 91 may be configured to gradually converge toward each other (as shown in FIG. 9), and N1 can be understood as a width dimension at any position of the end of the first channel segment 911 away from the second channel segment 912 in the width direction of the vehicle (i.e., the Y direction shown in FIG. 1). For example, N1 may be a width dimension of a top wall of the end of the first channel segment 911 away from the second channel segment 912, or N1 may be a distance between bottommost ends of two side walls of the end of the first channel segment 911 away from the second channel segment 912.

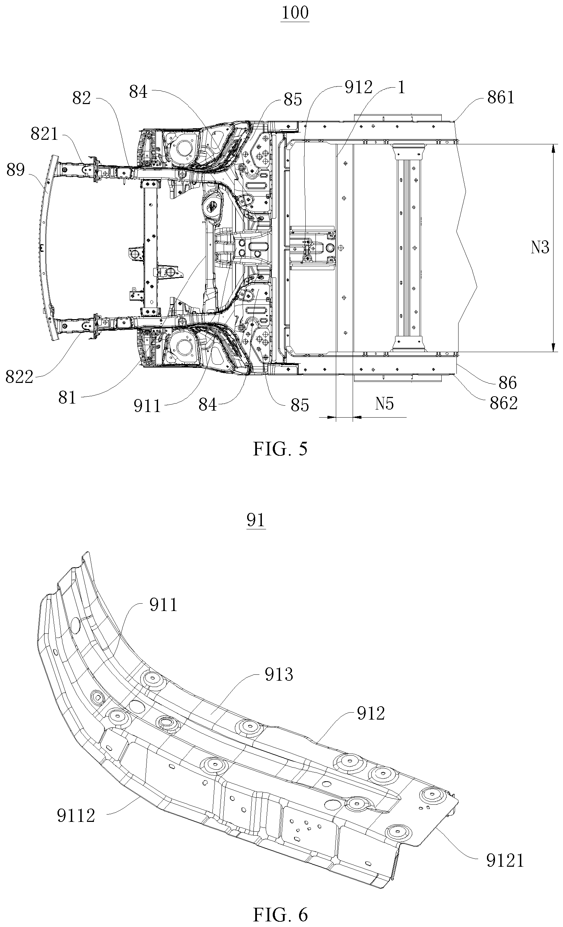

In some embodiments of the present disclosure, as shown in FIG. 5, the seat mounting beam 1 has a length of N3, where 0.07N3≤N2≤0.15N3. In the width direction of the vehicle (i.e., the Y direction shown in FIG. 1), the width of the end of the first channel segment 911 close to the second channel segment 912 may be N2, and in the width direction of the vehicle (i.e., the Y direction shown in FIG. 1), the length of the seat mounting beam 1 may be N3. The width N2 of the end of the first channel segment 911 close to the second channel segment 912 may be any value between 0.07N3 and 0.15N3. For example, N2 can be, but is not limited to, 0.07N3, 0.107N3, 0.15N3, etc. As some optional embodiments of the present disclosure, in the width direction of the vehicle (i.e., the Y direction shown in FIG. 1), the width of the end of the first channel segment 911 close to the second channel segment 912 may be 190 mm, and the length of the seat mounting beam 1 may be 1770 mm. Such a configuration can rationalize a ratio of the length of the seat mounting beam 1 to the width of the end of the first channel segment 911 close to the second channel segment 912, which is beneficial to improving overall structural strength of the vehicle body.

In some embodiments of the present disclosure, as shown in FIGS. 1, 3, and 6 to 8, the end of the second channel segment 912 away from the first channel segment 911 may have a first lap-joint flange 9121 adapted to be connected to a top wall of the seat mounting beam 1. As some optional embodiments of the present disclosure, the first lap-joint flange 9121 may be welded to the top wall of the seat mounting beam 1. As shown in FIG. 8, in the length direction of the middle channel 91 (i.e., the X direction shown in FIG. 1), the first lap-joint flange 9121 may have a length of N4. As shown in FIG. 5, the seat mounting beam 1 may have a width of N5, where 0.3N5≤N4≤0.5N5. That is, N4 can be, but is not limited to, 0.3N5, 0.4N5, 0.5N5, etc. Such a configuration can rationalize a ratio of the length of the first lap-joint flange 9121 to the width of the seat mounting beam 1, which is beneficial to ensuring connection strength between the first lap-joint flange 9121 and the seat mounting beam 1, thereby reducing a probability of a separation between the first lap-joint flange 9121 and the seat mounting beam 1.

As some optional embodiments of the present disclosure, as shown in FIGS. 7 and 8, the end of the second channel segment 912 away from the first channel segment 911 may have a second lap-joint flange 9122, and a plurality of second lap-joint flanges 9122 may be provided. For example, two second lap-joint flanges 9122 may be provided and respectively located at two sides of the second channel segment 912 in the width direction of the vehicle (i.e., the Y direction shown in FIG. 1). Each of the two second lap-joint flanges 9122 is adapted to be connected to a front side wall of the seat mounting beam 1. As some optional embodiments of the present disclosure, the second lap-joint flange 9122 may be welded to the front side wall of the seat mounting beam 1. Such a configuration can improve connection strength between the middle channel 91 and the seat mounting beam 1, which can thus reduce a probability of a separation between the middle channel 91 and the seat mounting beam 1.

In some embodiments of the present disclosure, as shown in FIG. 9, in the height direction of the vehicle (i.e., the Z direction shown in FIG. 3), the second channel segment 912 may have a height of N6, where 40 mm≤N6≤120 mm. That is, the height N6 of the second channel segment 912 may be any value between 40 mm and 120 mm. For example, N6 can be, but is not limited to, 40 mm, 80 mm, 120 mm, etc. It should be noted that in the height direction of the vehicle (i.e., the Z direction shown in FIG. 3), any part of the second channel segment 912 may have a height of N6. Such a configuration can rationalize the height dimension of the second channel segment 912, which is beneficial to ensuring structural strength of the second channel segment 912.

In some embodiments of the present disclosure, as shown in FIGS. 1 to 8, the second channel segment 912 may have a constant width from the first channel segment 911 to the second channel segment 912. That is, in the length direction of the vehicle (i.e., the X direction shown in FIG. 1), the width of the second channel segment 912 in the width direction of the vehicle may be constant. As some optional embodiments of the present disclosure, the width of the end of the first channel segment 911 close to the second channel segment 912 may be N2, and the width of the second channel segment 912 may be N2, where 150mm≤N2≤230mm. That is, the width of the second channel segment 912 may be any value between 150 mm and 230 mm.

That is, along the length direction of the vehicle (i.e., the X direction shown in FIG. 1), the width of the second channel segment 912 may be constant, and the width of the second channel segment 912 is equal to the width of the end of the first channel segment 911 close to the second channel segment 912. As some optional embodiments of the present disclosure, the width of the second channel segment 912 may be 190 mm. Such a configuration can rationalize the structural form of the second channel segment 912, which is beneficial to ensuring the structural strength of the second channel segment 912. In addition, by configuring the second channel segment 912 with a constant width, the production difficulty of the middle channel 91 is easily reduced.

It should be explained that in the height direction of the vehicle (i.e., the Z direction shown in FIG. 3), the first channel segment 911 and the second channel segment 912 may be provided with the connection flange 9112 at respective lower ends of the first channel segment 911 and the second channel segment 912, and the width of the second channel segment 912 described in the present disclosure does not include the width of the connection flange 9112.

It should be explained that in the height direction of the vehicle (i.e., the Z direction shown in FIG. 3), the two side walls of the middle channel 91 may be configured to gradually converge toward each other (as shown in FIG. 8), and N2 can be understood as the width dimension at any position of the second channel segment 912 in the width direction of the vehicle (i.e., the Y direction shown in FIG. 1). For example, N2 may be the width dimension of the top wall of the second channel segment 912, or N2 may be the distance between the bottommost ends of the two side walls of the second channel segment 912.

In some embodiments of the present disclosure, as shown in FIGS. 1-3 and 5, the vehicle body assembly 100 may further include a front bulkhead 83. The middle channel 91 may be located at a side of the front bulkhead 83 and may be connected to the front bulkhead 83. At least part of the first connection section 85, the front bulkhead cross beam 81, and the second connection section 84 may be located at another side of the front bulkhead 83. The first connection section 85, the front bulkhead cross beam 81, and the second connection section 84 may be connected to the front bulkhead 83.

As some optional embodiments of the present disclosure, the middle channel 91 may be located at a side of the front bulkhead 83 facing towards the passenger compartment and may be connected to the front bulkhead 83, and the at least part of the first connection section 85, the front bulkhead cross beam 81, and the second connection section 84 may be located at a side of the front bulkhead 83 away from the passenger compartment and may be connected to the front bulkhead 83.

As some optional embodiments of the present disclosure, as shown in FIGS. 6 to 8, the first channel segment 911 and the second channel segment 912 may be provided with a connection flange 9112 at respective lower ends of the first channel segment 911 and the second channel segment 912, and the middle channel 91 may be connected to the front bulkhead 83 through the connection flange 9112.

It should be explained that although the middle channel 91 and the front bulkhead cross beam 81 are located at two sides of the front bulkhead 83, the middle channel 91 and the front bulkhead cross beam 81 can have a direct connection relationship by spot-welding the middle channel 91, the front bulkhead cross beam 81, and the front bulkhead 83 together. Similarly, although the middle channel 91 and the second connection section 84 are located at the two sides of the front bulkhead 83, the middle channel 91 and the second connection section 84 can also have a direct connection relationship by connecting the middle channel 91, the second connection section 84, and the front bulkhead 83 through spot welding or other welding methods.

By locating the at least part of the first connection section 85, the front bulkhead cross beam 81, and the second connection section 84 at the other side of the front bulkhead 83, and locating the middle channel 91 at the side of the front bulkhead 83 and enabling the middle channel 91 to be connected to the front bulkhead 83, the arrangement positions of the first connection section 85, the middle channel 91, the front bulkhead cross beam 81 and the second connection section 84 can be rationalized. In this way, the at least part of the first connection section 85, the front bulkhead cross beam 81, and the second connection section 84 can be avoided from occupying space of the passenger compartment, which is beneficial to increasing the space of the passenger compartment, thereby improving experience of the passengers.

In some embodiments of the present disclosure, in a thickness direction of the front bulkhead 83, an overlapping region may exist between an orthographic projection of the middle channel 91 and an orthographic projection of the front bulkhead cross beam 81. Specifically, assuming that a part of the front bulkhead 83 connected to the front bulkhead cross beam 81 is a first part, in a thickness direction of the first part of the front bulkhead 83, an overlapping region may exist between an orthographic projection of the middle channel 91 and an orthographic projection of the front bulkhead cross beam 81. That is, in the thickness direction of the first part of the front bulkhead 83, the middle channel 91, the first part of the front bulkhead 83, and the front bulkhead cross beam 81 may be sequentially arranged. Such an arrangement can rationalize the relative positional relationship between the middle channel 91 and the front bulkhead cross beam 81. Moreover, such a configuration can enable the front lateral force to be borne by the front bulkhead cross beam 81 and transmitted to the middle channel 91. Thus, the front lateral force can be reliably borne, and the energy can be transmitted to the middle channel 91, which is beneficial to improving the safety performance of the vehicle.

In some embodiments of the present disclosure, in a thickness direction of the front bulkhead 83, an overlapping region may exist between an orthographic projection of the second connection section 84 and an orthographic projection of the middle channel 91. Assuming that a part of the front bulkhead 83 connected to the second connection section 84 is a second part, in a thickness direction of the second part of the front bulkhead 83, an overlapping region may exist between an orthographic projection of the second connection section 84 and an orthographic projection of the middle channel 91. That is, in the thickness direction of the second part of the front bulkhead 83, the middle channel 91, the second part of the front bulkhead 83, and the second connection section 84 may be sequentially arranged. Such an arrangement can make the relative position relationship between the middle channel 91 and the second connection section 84 reasonable. Moreover, such an arrangement can enable the rear lateral force to be borne by the second connection section 84 and transmitted to the middle channel 91. Thus, the rear lateral force can be reliably borne, and the energy can be transmitted to the middle channel 91, which is beneficial to improving the safety performance of the vehicle.

In some embodiments of the present disclosure, as shown in FIGS. 1 to 4, the middle channel 91 may be formed with a first groove structure 914 recessed away from the front bulkhead 83. That is, the first groove structure 914 may be open towards the front bulkhead 83, and the front bulkhead 83 may shield at least part of an open end of the first groove structure 914. As some optional embodiments of the present disclosure, as shown in FIGS. 6 to 8, the first channel segment 911 of the middle channel 91 and the second channel segment 912 of the middle channel 91 can be provided with a connection flange 9112 at respective lower ends of the first channel segment 911 and the second channel segment 912, and the middle channel 91 may be connected to the front bulkhead 83 through the connection flange 9112. The at least part of the open end of the first groove structure 914 may be shielded by the front bulkhead 83. That is, the front bulkhead 83 can shield the at least part of the open end of the first groove structure 914.

As some optional embodiments of the present disclosure, as shown in FIG. 9, the first channel segment 911 may define a first groove that is open, and the second channel segment 912 may define a second groove 9123 that is open. The first groove and the second groove 9123 may be adjacent to each other and may be in communication with each other. The first groove and the second groove 9123 may together constitute the first groove structure 914. Both the first groove and the second groove 9123 may be open towards the front bulkhead 83 of the vehicle.

At least part of an open end of the first groove and/or at least part of an open end of the second groove 9123 is shielded by the front bulkhead 83. That is, the front bulkhead 83 can shield the at least part of the open end of the first groove or the at least part of the open end of the second groove 9123, or the front bulkhead 83 can shield the at least part of the open end of the second groove 9123 and the at least part of the open end of the first groove. As some optional embodiments of the present disclosure, the connection flange 9112 of the first channel segment 911 of the middle channel 91 and a part of the connection flange 9112 of the second channel segment 912 may be connected to the front bulkhead 83 of the vehicle.

Such a configuration can form a box-like structure between the middle channel 91 and the front bulkhead 83, which is beneficial to improving an anti-collision capability of a front part of the vehicle, thereby ensuring the collision safety performance of the vehicle.

In some embodiments of the present disclosure, as shown in FIG. 3, the second channel segment 912 may have a first subchannel segment 9124 and a second subchannel segment 9125. The first subchannel segment 9124 may be connected between the first channel segment 911 and the second subchannel segment 9125. The first channel segment 911 and the first subchannel segment 9124 are adapted to be connected to the front bulkhead 83. The second subchannel segment 9125 is adapted to be connected to the seat mounting beam 1. That is, the first channel segment 911 may define the first groove that is open. The first subchannel segment 9124 may define a first sub-groove that is open. The second subchannel segment 9125 may define a second sub-groove that is open. The first sub-groove and the second sub-groove together constitute the second groove 9123. The first channel segment 911 and the first subchannel segment 9124 are adapted to be connected to the front bulkhead 83. Moreover, an open end of the first groove of the first channel segment 911 facing towards the front bulkhead 83 is shielded by the front bulkhead 83, and an open end of the first sub-groove of the first sub-channel facing towards the front bulkhead 83 is shielded by the front bulkhead 83.

It should be noted that the first channel segment 911 and the first subchannel segment 9124 are subjected to great forces. By configuring the open end of the first groove facing towards the front bulkhead 83 to be shielded by the front bulkhead 83, and configuring the open end of the first sub-groove facing towards the front bulkhead 83 to be shielded by the front bulkhead 83, impact resistance of the first channel segment 911 and the first subchannel segment 9124 can be improved, thereby facilitating improving the impact resistance of the front part of the vehicle. In this way, the collision safety performance of the vehicle can be ensured.

As some optional embodiments of the present disclosure, as shown in FIG. 6, the middle channel 91 may have a reinforcement structure 913, which may protrude away from the front bulkhead 83. A plurality of reinforcement structures 913 may be provided. For example, as shown in the figure, two reinforcement structures 913 may be provided.

In some embodiments of the present disclosure, as shown in FIG. 4, at least one of the first connection section 85, the front bulkhead cross beam 81, and the second connection section 84 may be formed with a second groove structure 88 recessed away from the front bulkhead 83. That is, any one or any two of the first connection section 85, the front bulkhead cross beam 81, and the second connection section 84 may be formed with the second groove structure 88, or the first connection section 85, the front bulkhead cross beam 81, and the second connection section 84 each may be formed with the second groove structure 88. The second groove structure 88 may be open towards the front bulkhead 83, and the front bulkhead 83 may shield at least part of an open end of the second groove structure 88.

As some optional embodiments of the present disclosure, at least one of the first connection section 85, the front bulkhead cross beam 81, and the second connection section 84 may be welded to the front bulkhead 83 through a flange structure. By configuring the front bulkhead 83 to shield the at least part of the open end of the second groove structure 88, the box-like structure can be formed between the front bulkhead 83 and the at least one of the first connection section 85, the front bulkhead cross beam 81, and the second connection section 84, thereby improving the impact resistance of the front part of the vehicle. Thus, the collision safety performance of the vehicle can be ensured.

Furthermore, by locating the middle channel 91 at the side of the front bulkhead 83 and connecting the middle channel 91 to the front bulkhead 83, locating the at least part of the first connection section 85, the front bulkhead cross beam 81, and the second connection section 84 at the other side of the front bulkhead 83, and configuring the front bulkhead 83 to shield the at least part of the open end of the first groove structure 914 and the at least part of the open end of the second groove structure 88, a plurality of box-like structures can be disposed at the two sides of the front bulkhead 83, thereby enabling the vehicle body assembly 100 to effectively transfer energy during a collision. In this way, the collision safety performance of the vehicle can be ensured.

In some embodiments of the present disclosure, as shown in FIGS. 1 to 3 and 5, the front bulkhead cross beam 81 may have an end connected to a corresponding one of first connection sections 85. The front bulkhead cross beam 81 may extend in the width direction of the vehicle (i.e., the Y direction of the vehicle). Two first connection sections 85 may be provided and may be disposed at the two sides of the front bulkhead cross beam 81 in the width direction of the vehicle. The two ends of the front bulkhead cross beam 81 each may be connected to an adjacent first connection section 85. Such a configuration is beneficial to improving the overall structural strength of the vehicle body assembly 100. Thus, the anti-collision performance of the vehicle body assembly 100 can be enhanced. In addition, the force transmission path of the vehicle body assembly 100 can be made more unobstructed.

In some embodiments of the present disclosure, as shown in FIGS. 1 to 5, the plurality of longitudinal beams 82 may include a first longitudinal beam 821 and a second longitudinal beam 822, and the plurality of sill beams 86 may include a first sill beam 861 and a second sill beam 862. The first longitudinal beam 821 and the second longitudinal beam 822 may be opposite to and spaced apart from each other in a second direction of the vehicle body assembly 100 (i.e., an Y direction shown in FIG. 1). The front bulkhead cross beam 81 may be connected between the first longitudinal beam 821 and the second longitudinal beam 822. The first sill beam 861 and the second sill beam 862 may be opposite to and spaced apart from each other in the second direction (i.e., the Y direction shown in FIG. 1). The first longitudinal beam 821 may correspond to the first sill beam 861. The second longitudinal beam 822 may correspond to the second sill beam 862.

Specifically, a first connection section 85 is connected between the first longitudinal beam 821 and the first sill beam 861, and a first connection section 85 is connected between the second longitudinal beam 822 and the second sill beam 862. Such a configuration can allow the longitudinal beam 82, the first connection section 85, and the sill beam 86 form a reasonable force transmission path. Further, two A-pillars 87 and two first connection sections 85 may be provided. One of the two A-pillars 87 may be connected to the first sill beam 861 and one of the two first connection sections 85, and another one of the two A-pillars 87 may be connected to the second sill beam 862 and another one of the two first connection sections 85. The longitudinal beam 82, the first connection section 85, the A-pillar 87, and the sill beam 86 can form a reasonable force transmission path by providing the A-pillar 87, which is beneficial to improving the safety performance of the vehicle.

A vehicle according to embodiments of the present disclosure includes the above-mentioned vehicle body assembly 100. By connecting the first connection section 85 between the longitudinal beam 82 and the corresponding sill beam 86, and connecting the second connection section 84 between the middle channel 91 and the corresponding first connection section 85, the vehicle body assembly 100 can have a reasonable force transmission path. When the frontal collision of the vehicle occurs, the vehicle body assembly 100 can reliably absorb and transmit the collision energy, thereby reducing the probability of the passenger injury. Thus, the safety performance of the vehicle can be improved.

In the description of the present disclosure, it is to be understood that, terms such as "center", "longitudinal", "lateral", "length", "width", "thickness", "over", "below", "front", "rear", "left", "right", "vertical", "horizontal", "top", "bottom", "in", "out", "clockwise", "anti-clockwise", "axial", "radial" and "circumference" indicating the orientations and location relations are based on the orientations and location relations illustrated in the drawings, which are only used for describing the present disclosure and simplifying the description, and are not intended to indicate or imply that the referred device or the elements must have the specific orientations or be structured and performed in the specific orientations, which could not to be understood to the limitation of the present disclosure.

In the description of the present disclosure, "a first feature" and "a second feature" may include one or more of these features.

In the description of the present disclosure, "a plurality of" means two or more.

In the description of the present disclosure, the first characteristic "above" or "below" the second characteristic may include case where the first characteristic is in direct contact with the second characteristic, and case where the first characteristic and the second characteristic are not in direct contact with each other, but are in contact with each other through an additional feature interposed between them.

In the description of the present disclosure, a first feature "on", "above" or "over" a second feature includes the first feature being directly above and obliquely above the second feature, or simply means that the first feature is horizontally higher than the second feature.

In the description of this specification, descriptions with reference to the terms "an embodiment", "some embodiments", "an exemplary embodiment", "an example", "a specific example", or "some examples" etc., mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner.

Although embodiments of the present disclosure have been illustrated and described, it is conceivable for those of ordinary skill in the art that various changes, modifications, replacements, and variations can be made to these embodiments without departing from the principles and spirit of the present disclosure. The scope of the present disclosure shall be defined by the claims as appended and their equivalents.

## Claims

1. A vehicle body assembly, comprising:
a plurality of longitudinal beams;
a plurality of sill beams;
a first connection section connected between one of the plurality of longitudinal beams and a corresponding sill beam of the plurality of sill beams;
a front bulkhead cross beam connected to each of the plurality of longitudinal beams;
a seat mounting beam connected to each of the plurality of sill beams;
a middle channel connected between the front bulkhead cross beam and the seat mounting beam; and
a second connection section connected between the middle channel and a corresponding one of first connection sections.

2. The vehicle body assembly according to claim 1, further comprising an A-pillar connected to a corresponding one of the plurality of sill beams and a corresponding one of the first connection sections.

3. The vehicle body assembly according to claim 1 or 2, wherein:
in a first direction of the vehicle body assembly, a connection between the first connection section and the corresponding one of the plurality of sill beams is located at a rear side of a connection between the first connection section and the corresponding one of the plurality of longitudinal beams; and
in a second direction of the vehicle body assembly, the connection between the first connection section and the corresponding one of the plurality of sill beams is located at an outer side of the connection between the first connection section and the corresponding one of the plurality of longitudinal beams, the first direction being perpendicular to the second direction.

4. The vehicle body assembly according to claim 3, wherein:
in the first direction, a connection between the second connection section and the corresponding one of the first connection sections is located at the rear side of the connection between the first connection section and the corresponding one of the plurality of longitudinal beams; and
in the second direction, the connection between the second connection section and the corresponding one of the first connection sections is located at an inner side of the connection between the first connection section and the corresponding one of the plurality of sill beams.

5. The vehicle body assembly according to any one of claims 1 to 4, wherein the first connection section and a corresponding one of second connection sections are integrally formed.

6. The vehicle body assembly according to any one of claims 1 to 5, wherein:
in a first direction of the vehicle body assembly, the second connection section is located at a rear side of the front bulkhead cross beam; and
in a third direction of the vehicle body assembly, the second connection section is located below the front bulkhead cross beam, the first direction being perpendicular to the third direction.

7. The vehicle body assembly according to any one of claims 1 to 6, wherein in a length direction of the middle channel, a connection between the second connection section and the middle channel is located at a middle part of the middle channel.

8. The vehicle body assembly according to any one of claims 1 to 7, wherein in a first direction of the vehicle body assembly, a front end of the middle channel is connected to the front bulkhead cross beam, and a rear end of the middle channel is connected to the seat mounting beam.

9. The vehicle body assembly according to any one of claims 1 to 8, wherein the middle channel comprises a first channel segment and a second channel segment connected to the first channel segment, wherein:
an end of the first channel segment away from the second channel segment is connected to the front bulkhead cross beam;
an end of the second channel segment away from the first channel segment is connected to the seat mounting beam;
in a third direction of the vehicle body assembly, the end of the first channel segment away from the second channel segment is higher than the second channel segment; and
the first channel segment is constructed into a downwardly concave arcuate shape.

10. The vehicle body assembly according to claim 9, wherein the first channel segment has a width gradually increasing from the first channel segment to the second channel segment.

11. The vehicle body assembly according to claim 9 or 10, wherein the end of the first channel segment away from the second channel segment has a width of N1, where 100 mm≤N1≤180 mm.

12. The vehicle body assembly according to any one of claims 9 to 11, wherein an end of the first channel segment adjacent to the second channel segment has a width of N2, where 150 mm≤N2≤230 mm.

13. The vehicle body assembly according to claim 12, wherein in a second direction of the vehicle body assembly, the seat mounting beam has a length of N3, where 0.07N3≤N2≤0.15N3, the second direction being perpendicular to the third direction.

14. The vehicle body assembly according to any one of claims 9 to 13, wherein in the third direction, the second channel segment has a height of N6, where 40 mm≤N6≤120 mm.

15. The vehicle body assembly according to any one of claims 9 to 14, wherein the second channel segment has a constant width from the first channel segment to the second channel segment.

16. The vehicle body assembly according to any one of claims 1 to 15, further comprising a front bulkhead, wherein:
the middle channel is located at a side of the front bulkhead and connected to the front bulkhead;
at least part of the first connection section, the front bulkhead cross beam, and the second connection section are located at another side of the front bulkhead; and
the first connection section, the front bulkhead cross beam, and the second connection section are connected to the front bulkhead.

17. The vehicle body assembly according to claim 16, wherein in a thickness direction of the front bulkhead, an overlapping region exists between an orthographic projection of the middle channel and an orthographic projection of the front bulkhead cross beam.

18. The vehicle body assembly according to claim 16 or 17, wherein in a thickness direction of the front bulkhead, an overlapping region exists between an orthographic projection of the second connection section and an orthographic projection of the middle channel.

19. The vehicle body assembly according to any one of claims 16 to 18, wherein the middle channel is formed with a first groove structure recessed away from the front bulkhead, the front bulkhead shielding at least part of an open end of the first groove structure.

20. The vehicle body assembly according to any one of claims 16 to 19, wherein at least one of the first connection section, the front bulkhead cross beam, and the second connection section is formed with a second groove structure recessed away from the front bulkhead, the front bulkhead shielding at least part of an open end of the second groove structure.

21. The vehicle body assembly according to any one of claims 1 to 20, wherein the front bulkhead cross beam has an end connected to a corresponding one of first connection sections.

22. The vehicle body assembly according to any one of claims 1 to 21, wherein:
the plurality of longitudinal beams comprise a first longitudinal beam and a second longitudinal beam, the first longitudinal beam and the second longitudinal beam being opposite to and spaced apart from each other in a second direction of the vehicle body assembly, and the front bulkhead cross beam being connected between the first longitudinal beam and the second longitudinal beam; and
the plurality of sill beams comprise a first sill beam and a second sill beam, the first sill beam and the second sill beam being opposite to and spaced apart from each other in the second direction, and the first longitudinal beam and the second longitudinal beam corresponding to the first sill beam and the second sill beam, respectively.

23. A vehicle, comprising the vehicle body assembly according to any one of claims 1 to 22.
